# EUROPEAN PATENT APPLICATION

(11) **EP 3 379 413 A1**
(43) Date of publication of application: **26.09.2018**
(21) Application number: 17162029.7
(22) Date of filing: 21.03.2017
(51) Int. Cl.: G06F 9/50, G06F 9/44

(54) **OPTIMIZATION OF A SOFTWARE IMAGE LAYER STACK**

(71) Applicant: Nokia Solutions and Networks Oy, 02610 Espoo (FI)
(72) Inventor: Vandeputte, Frederik, 2018 Antwerpen (BE)
(74) Representative: IP HILLS NV

(57) **Abstract**

According to an embodiment, a device (101) for optimizing a software image layer stack (145) is disclosed. The software image layer stack comprises a plurality of software image layers (141-144) and each layer comprises one or more files (130-140). The device comprises i) a profiling module (104) for determining usage patterns of the files (130-140) and ii) a layer optimization module (105) configured to rearrange the files into optimized software image layers (161-164) and an optimized software image layer stack (165) according to similar usage patterns.

## Description

### Technical Field

This application generally relates to management of image layer stacks in a distributed computing environment, and more particularly but not exclusively, to a software image layer stack, a device and method for optimizing a software image layer stack and a device and method for provisioning software image layers of an optimized software image layer stack.

### Background

This section introduces aspects that may be helpful to facilitating a better understanding of embodiments herein. Accordingly, the statements of this section are to be read in this light and are not to be understood as admissions about what is in the prior art or what is not in the prior art.

A software image layer stack, further referred to as software stack, is a specific type of software image that comprises a plurality of software image layers logically stacked on top of each other. Each software image layer comprises a subset of the various files, e.g., binaries, dynamic or static libraries, other artefacts, etc. This way, application services may be wrapped and deployed as a software stack.

One application of software stacks is for operating-system-level virtualization where not only a software application but also a user-space is virtualized within an instance of the software stack. One specific implementation of is the Docker platform that allows to wrap a piece of software in a software stack that contains everything needed to run: code, runtime, system tools, system libraries etc. This allows deploying software that will always run the same, regardless of its environment. Within the Docker platform, an image stack is called a container or image and the software image layers are referred to as image layers or container layers.

An advantage of the different image layers is that different software stacks can have the same bottom layers and different top layers. As a result, stacks for different applications do not have to be built from scratch. Furthermore, services that retrieve the stacks from a software repository and provision them further can retrieve the differing layers in order to provision a complete software stack. It is therefore important that the software stacks are built in an optimized way such that reuse of software layers is maximized and/or provisioning can be done efficiently, i.e., by minimizing the induced network traffic.

One optimization is to create minimalistic software image layer stacks, i.e., by making the software stacks as small as possible, for example by manually or automatically removing clutter. Tools already exist to reduce the aggregated size of Docker container images. Some only work for particular application runtimes such as Java, Python, NodeJS or Ruby. Others tools rely on a combination of static and dynamic application profiling techniques to determine which files are used and which are not. The files that are not used are then removed from the software stack in order to obtain an optimized software stack. Other tools reduce the overhead of the layering by merging some of the software layers into one single software layer, for example when files that are created in one software layer are removed at a higher software layer.

A second optimization is to provision the software layers on demand when an application within an software stack is started. This allows the application to start almost immediately and to pull software layers from the repository when needed, i.e., on demand. In one specific implementation the software layers are provisioned in a decentralized fashion, e.g., by torrents. The files in the software layers are then fetched individually by downloading the corresponding torrent pieces on demand.

### Summary

A limitation with the first optimization is that the advantage of having more generic feature-rich layers is sacrificed. Moreover, the optimization can be error-prone when particular files are only used in very specific scenarios, e.g., debugging, severe error, application-specific behaviour. In such a case files may have been removed that are needed by the application and the user may have to manually report these exceptions because, otherwise, the application may crash or stop working as it should.

A problem with the second optimization is that the start-up behaviour may become unpredictable and slow, as all files are pulled in on-demand.

It is an objective of the present disclosure, among other things, to overcome the above identified shortcomings.

Disclosed herein are various embodiments of devices and methods that may be beneficially applied to, e.g., management of software image layer stacks in distributed computing systems. While such embodiments may be expected to provide improvements in performance of such systems relative to conventional implementations, no particular result is a requirement unless explicitly recited in a particular claim.

According to a first aspect, this object is achieved by a device for optimizing a software image layer stack. The software image layer stack comprises a plurality of software image layers and each layer comprises one or more files. The device further comprises i) a profiling module for determining usage patterns of the files; ii) a layer optimization module configured to rearrange the files into optimized software image layers and an optimized software image layer stack according to similar usage patterns.

A software image layer stack, further referred to as software stack, is a specific type of software image that comprises a plurality of software image layers, further referred to as software layers, logically stacked on top of each other. Each software image layer comprises a subset of the various files. By the logical stacking, the stack comprises a base layer or bottom layer and a top layer with, optionally, other software layers in between. A higher layer takes precedence over a lower layer and may add new files to the software stack, change files from a lower layer or even remove files from a lower layer.

The profiling module determines the usage patterns of the files in the different layers, i.e., a measure of how the files are used during use of the software stack. The files are then logically reordered or rearranged according the usage pattern by the optimization module and files that are used more are arranged into lower layers than files that are used less. As the base layer is always the first layer that is provisioned when the software stack is running, it will contain the files that are most likely to be needed. Therefore, the provisioning of the higher layers will be related to the use of the software stack or, in other words, when during the execution of the software stack a file is needed that is not yet provisioned, it will most probably be present in the next software image layer. It is thus an advantage that the device will provide a software stack that leads to a more deterministic behaviour during use and that is better suited for on-demand provisioning.

Advantageously, the layer optimization module is further configured to incorporate information on the usage patterns into the optimized software image layer stack. In other words, not only are the usage patterns used to optimize the software stack itself, but they are also incorporated into the software stack. This has the advantage that the usage patterns can be used at run-time, i.e., when provisioning the software layers to a run-time environment and when executing the software stack in the run-time environment.

The obtained usage patterns of files of an optimized software layer may further be aggregated into a single usage pattern of the optimized software image layer. This has the advantage that the usage pattern becomes a property of a software image layer and that, without knowledge of the files within a software layer, accurate usage information is available.

Such usage pattern of a file may for example comprise a usage probability of the file indicative of a probability that the file will be used when the software image layer stack is in use.

Such usage pattern of a file may for example comprise a first-use delay indicative of, when the software image layer stack is in use, a time delay between a start of use of the software image layer stack and a usage of the respective file.

According to an embodiment, the profiling module is further configured to determine usage patterns for different applications of the software image layer stack. The layer optimization module is then further configured to rearrange the files into different sets of optimized software image layers for the different applications according to different determined usage patterns for the different applications.

Files in the software layers may not always have the same usage pattern, but may differ depending on the use case of the software stack. Therefore, the optimization may create different software stacks depending on the different usage of the files. This allows to further optimize the provisioning of the software stack.

According to a second aspect, the disclosure relates to a provisioning device for provisioning a selection of software image layers of a software image layer stack. The provisioning device comprises:
- a decision module arranged to determine usage pattern requirements for files in the software image layers; and
- a retrieving module arranged to retrieve from a software image data store software images layers of the software image layer stack that fulfil the usage pattern requirements thereby obtaining the selection of software image layers.

Whereas the device according to the first aspect relates to the design-time of the software stack, i.e., when the stack is created and/or stored, the provisioning device relates to the run-time of the software stack, i.e., when the software stack is retrieved for execution within a run-time environment, for example within an operating system running an application for executing the software stack. A provisioning application or device performs the function of retrieving the software layers such that the software stack can be executed. Depending on the requirements for execution of the software stack, the provisioning device will determine a requirement of the usage pattern for the files in the software layers of the software stack, for example based on a configurable threshold value. The retrieving module then retrieves the software layers that comply with the usage pattern requirements and provides them to the execution environment of the software stack.

Because the software layers are retrieved based on the usage pattern of the files in the stack, the behaviour of the software stack execution becomes much more deterministic as the retrieval based on the usage patterns allows a very good control of the trade-of between just-in-time provisioning of the software layer and deterministic behaviour of the execution of the stack.

Such usage pattern of a file may for example comprise a usage probability of the file indicative of a probability that the file will be used when the software image layer stack is in use.

This way, a selection of layers can be provisioned with a usage probability greater than a certain threshold. The higher the threshold is chosen, the lower the likelihood that layers will be provisioned but the higher the risk that the execution will stall due to the unavailability of certain files.

Such usage pattern of a file may for example comprise a first-use delay indicative of, when the software image layer stack is in use, a time delay between a start of use of the software image layer stack and a usage of the respective file.

The first-use delay allows to provision the software layers just before the time that they are needed. The advantage is that a more deterministic behaviour than on-demand provisioning is achieved without the need for provisioning all the layers before execution of the software stack.

According to an embodiment, the decision module is further arranged to determine the usage pattern requirement based on a sensitivity threshold and wherein the retrieving module is further configured to retrieve the selection of software image layers before the start of the software image layer stack.

According to a third aspect, the disclosure relates to a software image layer stack comprising software image layers. Each layer comprises one or more files. The software image layer stack further comprises usage patterns of the files.

According to a fourth aspect, the disclosure relates to a computer-implemented method for optimizing a software image layer stack; the software image layer stack comprising a plurality of software image layers; each layer comprising one or more files; the method comprising the following steps:
- determining usage patterns of the files;
- rearranging the files into optimized software image layers and an optimized software image layer stack according to similar usage patterns.

According to a fifth aspect, the disclosure relates to a computer-implemented method for provisioning a selection of software image layers of a software image layer stack; the method comprising the following steps:
- determining usage pattern requirements for files in the software image layers; and
- retrieving from a software image data store software images layers of the software image layer stack that fulfil the usage pattern requirements as the selection of software image layers.

According to a sixth aspect, the disclosure relates to a computer program product comprising a computer-executable instructions for performing any one of the methods according to fourth or fifth aspect when the program is run on a computer.

According to a seventh aspect, the disclosure relates to a computer readable storage medium comprising the computer program product according to the sixth aspect.

### Brief Description of the Drawings

Fig. 1 illustrates a device for optimizing a software image stack and a device for provisioning a software image stack according to a first embodiment of the invention; and
Fig. 2 illustrates a device for optimizing a software image stack and a device for provisioning a software image stack according to a second embodiment of the invention; and
Fig. 3 illustrates a suitable computing system for realizing methods and devices according to embodiments of the invention.

### Detailed Description of Embodiment(s)

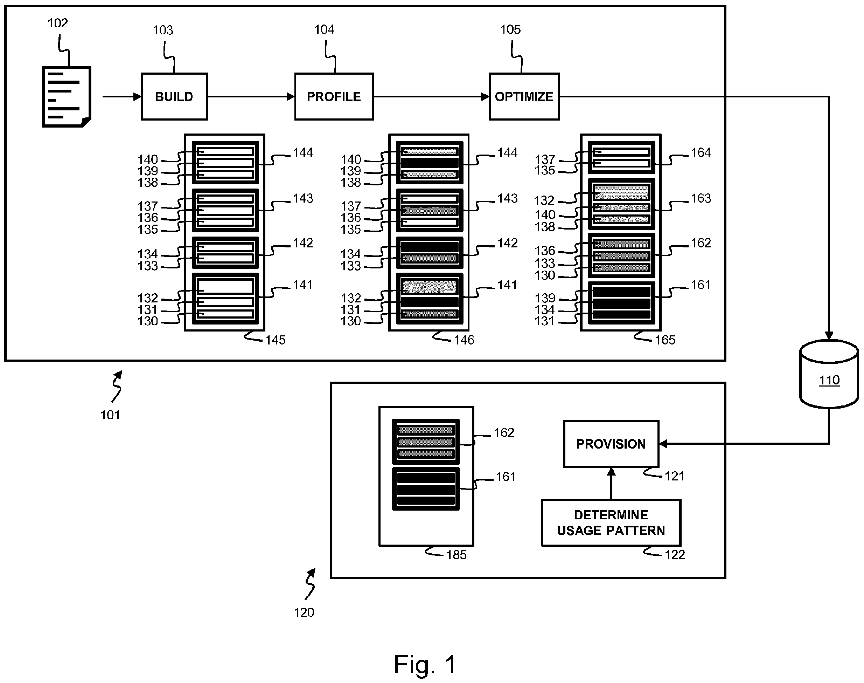

Fig. 1 illustrates a device 101 for optimizing a software stack 145 according to an embodiment of the invention. The unoptimized software stack 145 may for example be obtained from a building module 103 that builds the software stack 145 from a building script 102. A software stack is a specific type of software image that comprises a plurality software layers, logically stacked on top of each other. Each software image layer comprises a subset of files. By the logical stacking, the stack comprises a base layer or bottom layer and a top layer with, optionally, other software layers in between. A higher layer takes precedence over a lower layer. A higher layer may comprise a new file and thus add a file to the software stack. A higher layer may also comprise a changed version of a file which is already present in a lower layer. The changed version then takes precedence in the software stack. A higher layer may also be produced by the omission of a file from a lower layer, e.g., when considering the software stack as a whole, the file is not present in the stack.

Software stack 145 is an example of such a software stack comprising software layers 141 to 144 respectively comprising the files 130-132, 133-134, 135-137, 138-140. When the software stack 145 is built, it is provided to the profile module 104. In the profile module 104, software stack 145 is profiled by deriving usage patterns for each of the files 130-140. A usage pattern of a file is indicative of how the file will be used during later execution of the software stack. The usage pattern may for example comprise the probability that a file will be used during execution. Alternatively or complementary, the usage pattern may comprise the 'first-use-delay', i.e., the expected time delay before the file is used after execution of the software stack. Also additional information may be provided such as the purpose of the particular file, for example for debugging, root cause analysis, logging etc.

The usage pattern is illustrated in Fig. 1 by a shading of the files 130 to 140 in the profiled software stack 146. The darker the shading, the higher the probability that the file will be used. When the software stack is profiled, it is optimized by the optimization module 105. This optimization comprises rearranging the files 130-140 into new software layers according to their usage patterns, e.g., files with a similar usage patterns are arranged into a same software layer. Each software layer may for example correspond with a certain range of usage probabilities and/or 'first-use-delays'. The amount of new software layers may be chosen freely wherein a higher amount of layers offers a greater flexibility in provisioning and reuse but with a higher complexity and vice versa.

The new software layers are then again arranged in a new software stack. Fig. 1 illustrates such an optimized software stack 165. The base layer 161 comprises the files 131,134 and 139 with the highest usage pattern; the second layer 162 comprises the files 130, 133 and 136 with a lower usage pattern; the third layer 163 comprises the files 138, 140 and 132 with an even lower usage pattern and the highest layer 164 comprises the files 135 and 137 with the lowest usage pattern.

The profiling may be performed by various methods known to the skilled person. For example, static and dynamic application profiling techniques used already for generating minimalistic software image layer stacks may be used for generating the usage pattern. Additionally, some of the existing layers could also have specific tags, indicating that all files in this layer are optional and/or would typically be used for particular purpose, e.g., debugging, root cause analysis, logging, etc. thereby speeding up the optimization and facilitating the later provisioning.

The usage pattern of the files may further be embedded into the optimized software stack 165. Preferably, a usage pattern of each software layer is determined based on the files within the software layer and incorporated into the software stack, i.e., the usage patterns of the files in a software layer are aggregated into a single usage pattern for the software layer. Aggregation may for example be done by calculating an average value of the usage patterns of the files. Additionally, an indication of the deviation from this average value may be calculated, for example a maximum deviation, a standard deviation or a certain percentile. For the first-use delay, the minimum and/or average first-use delay may be used. Incorporation may for example be done by adding the usage patterns in a metadata field within the software container 165.

Subsequently, the optimized software stack 165 is stored in data storage 110, for example in an online software repository that manages a plurality of software stacks.

When software stack 145 is to be used for multiple application services, each with a different usage pattern, this may be taken into account when generating and optimizing the software layers. For example, different optimized software stacks 165 may be created, each one for a different application of the software stack.

Fig. 1 further illustrates a provisioning device 120 according to an embodiment of the invention. Provisioning device 120 is arranged to provision optimized software stacks 165 to application environments that are able to execute an instance of the software stack 165. More particular, device 120 comprises a provisioning module 121 for retrieving a selection of the software layers 161 to 164 from repository 110 and to provide the software layers to the execution environment. Such a selection is illustrated by software stack instance 185 only comprising the software layers 161 and 162. In order to select the appropriate software layers, the device 120 comprises a decision module 122 that determines the usage pattern that the selected layers should at least comprise. The provisioning module 121 then retrieves the image layers that at least comprise the determined usage pattern.

The provisioning module 121 may for example retrieve from the repository 110 a listing of the different software layers 161-164 together with the usage pattern of each software layer. When the provisioning module 121 receives the minimum usage from the decision module 122, it identifies the software layers having at least this minimum usage and requests and receives these software layers from the repository 110. The layers 161-162 are then provided to the run-time environment that executes the software stack 185.

According to an embodiment, the usage probability is used to determine which software layers are retrieved before starting the execution of the software stack 185. Then, after the starting, the further software layers are provided on-demand, i.e., when the files in an unretrieved software layer are needed. The minimum probability may further be made configurable. The higher this minimum is set, the lesser amount of software layers are downloaded but the higher the probability that the execution will stall and that a missing software layer will have to be downloaded.

Alternatively or additionally, the 'first-use-delay' of the software layers is used by the decision module to determine which software layers are retrieved from repository 110. This way, even during execution of the software stack 185, the decision module will instruct the provision module 121 to retrieve software layers where the difference between the 'first-use-delay' and the actual time elapsed since the start of the software stack 185 is below a configurable threshold. This further reduces the risk that the execution of the software stack 185 will stall.

The decision module 122 may apply a provisioning strategy that may be referred to as "eager" or "greedy". According to this strategy, the provisioning is instructed to further fetch all or most of the other layers while the software stack 185 is executed. This will result in almost no stalling of the execution of the software stack 185.

The decision module 122 may also apply a lazy provisioning strategy wherein software image layers with a probability below some fixed or configurable threshold are only fetched on-demand. This allows reducing the overhead of fetching all these layers, i.e., reducing bandwidth and storage requirements of the provisioning device 120.

The decision module 122 may also apply a predictive provisioning strategy wherein the decision module 122 predicts, based on the runtime behaviour of the runtime environment, the system resource behaviour, or possibly explicit application hints, which software layers will be required in the near future. This can significantly reduce the possible application delays in case an improbable software image layer needs to be retrieved on-demand thereby mitigating a drawback of a more lazy provisioning strategy.

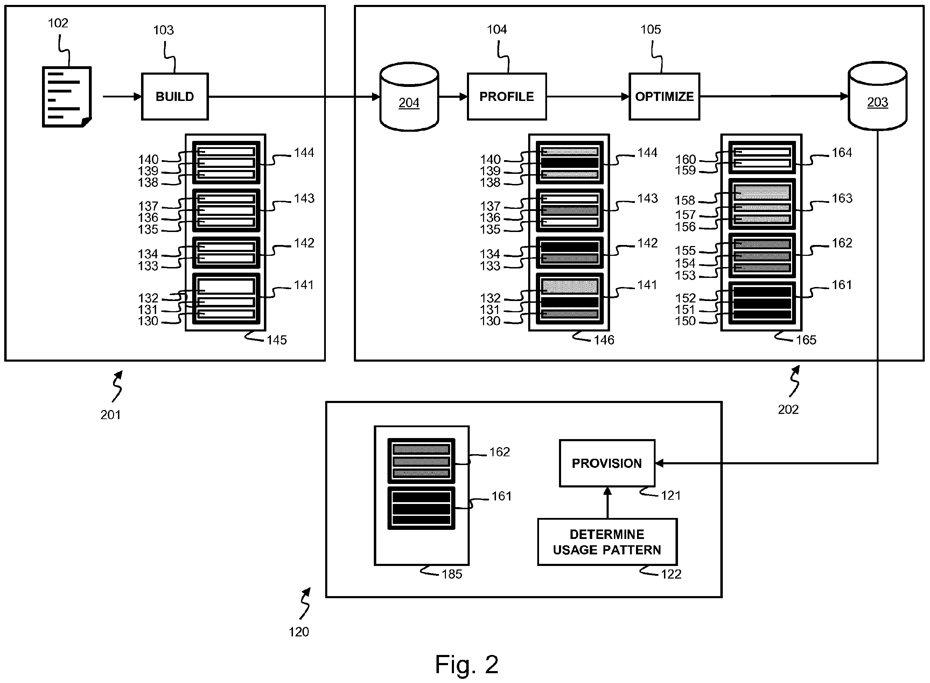

Fig. 2 illustrates a device 202 for optimizing a software stack according to an embodiment of the invention. The same profiling module 104 and 105 as in Fig. 1 are used to optimize software stack 145 into an optimized software stack 165. The difference is that the modules 104 and 105 are implemented within a repository device 202. The creation of the software stack 145 during design-time at device 201 is thus performed separate from the optimization. After creation, the software stack is retrieved by repository device 202 and stored in the data store 204, then the software stack is profiled by module 104 into the profiled software stack 146 and optimized by module 105 into the optimized software stack 165. The advantage of repository device 202 is that the optimization can be performed at run-time, i.e., when the provisioning device 120 starts provisioning the software stack to a run-time environment. This further allows to take the specific run-time and the moment of execution into account when optimizing the software stack 145. As the unoptimized software stack 145 is stored in the data store 204 of the repository, separate optimized software stacks 165 may further be created depending on the run-time environment and/or on the specific application of the software stack. This way, a different usage pattern for the same file will result in a set of optimized software stacks 165 depending on the different usage patterns.

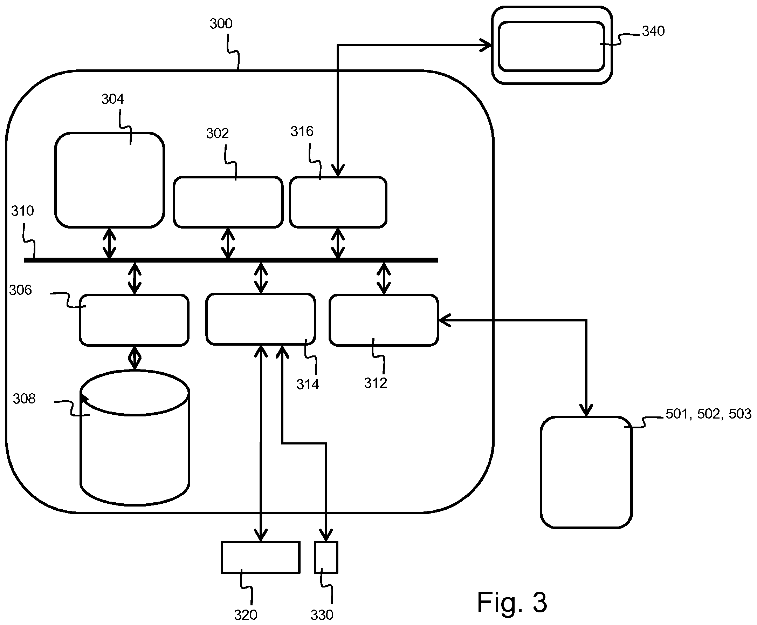

Fig. 3 shows a suitable computing system 300 according to an embodiment of the invention. Computing system 300 is suitable for implementing devices 101, 120, 201 and 202 according to the above embodiments. Computing system 300 may in general be formed as a suitable general purpose computer and comprise a bus 310, a processor 302, a local memory 304, one or more optional input interfaces 314, one or more optional output interfaces 316, a communication interface 312, a storage element interface 306 and one or more storage elements 308. Bus 310 may comprise one or more conductors that permit communication among the components of the computing system 300. Processor 302 may include any type of conventional processor or microprocessor that interprets and executes programming instructions. Local memory 304 may include a random access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator to input information to the computing device 300, such as a keyboard 320, a mouse 330, a pen, voice recognition and/or biometric mechanisms, etc. Output interface 316 may comprise one or more conventional mechanisms that output information to the operator, such as a display 340, etc. Communication interface 312 may comprise any transceiver-like mechanism such as for example one or more Ethernet interfaces that enables computing system 300 to communicate with other devices and/or systems, for example with other devices 101, 120, 201 and 202. The communication interface 312 of computing system 300 may be connected to such another computing system by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage elements 308 above is described as a local disk, in general any other suitable computer-readable media such as a removable magnetic disk, optical storage media such as a CD or DVD, -ROM disk, solid state drives, flash memory cards, ... could be used. The system 300 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (101, 202) for optimizing a software image layer stack (145); the software image layer stack comprising a plurality of software image layers (141-144); each layer comprising one or more files (130-140); the device comprising:
- a profiling module (104) for determining usage patterns of the files (130-140);
- a layer optimization module (105) configured to rearrange the files into optimized software image layers (161-164) and an optimized software image layer stack (165) according to similar usage patterns.

2. The device according to claim 1 further wherein the layer optimization module (105) is further configured to incorporate information on the usage patterns into the optimized software image layer stack (165).

3. The device according to claim 1 wherein the layer optimization module (105) is further configured to aggregate the usage patterns of the files of an optimized software image layer (161-164) into a usage pattern of the optimized software image layer.

4. The device according to claim 1 wherein the usage pattern of a file comprises a usage probability of the file indicative of a probability that the file will be used when the software image layer stack is in use.

5. The device according to claim 1 wherein the usage pattern of a file comprises a first-use delay indicative of, when the software image layer stack is in use, a time delay between a start of use of the software image layer stack and a usage of the respective file.

6. The device according to claim 1 wherein the profiling module (104) is further configured to determine usage patterns for different applications of the software image layer stack; and wherein the layer optimization module (105) is further configured to rearrange the files into different sets of optimized software image layers for the different applications according to different determined usage patterns for the different applications.

7. A provisioning device (120) for provisioning a selection of software image layers (161-162) of a software image layer stack (165); the provisioning device comprising:
- a decision module (122) arranged to determine usage pattern requirements for files in the software image layers; and
- a retrieving module (121) arranged to retrieve from a software image data store (110, 202) software images layers (161-162) of the software image layer stack (165) that fulfil the usage pattern requirements thereby obtaining the selection of software image layers.

8. The provisioning device according to claim 7 wherein the usage pattern of a file comprises a usage probability of the file indicative of a probability that the file will be used when the software image layer stack is in use.

9. The provisioning device according to claim 7 wherein the usage pattern of a file comprises a first-use delay indicative of, when the software image layer stack is in use, a time delay between a start of use of the software image layer stack and a usage of the respective file.

10. The provisioning device according to claim 7 wherein the decision module (122) is further arranged to determine the usage pattern requirement based on a sensitivity threshold and wherein the retrieving module is further configured to the retrieve the selection of software image layers before the start of the software image layer stack (185).

11. A software image layer stack (165) comprising software image layers (161-164); each layer comprising one or more files (150-160); and wherein the software image layer stack further comprises usage patterns of the files.

12. A computer-implemented method for optimizing a software image layer stack (145); the software image layer stack comprising a plurality of software image layers (141-144); each layer comprising one or more files (130-140); the method comprising the following steps:
- determining usage patterns of the files (130-140);
- rearranging the files into optimized software image layers (161-164) and an optimized software image layer stack (165) according to similar usage patterns.

13. A computer-implemented method for provisioning a selection of software image layers (161-162) of a software image layer stack (165); the method comprising the following steps:
- determining usage pattern requirements for files in the software image layers; and
- retrieving from a software image data store (110, 202) software images layers (161-162) of the software image layer stack (165) that fulfil the usage pattern requirements as the selection of software image layers.

14. A computer program product comprising a computer-executable instructions for performing any one of the methods according to claim 12 or 13 when the program is run on a computer.

15. A computer readable storage medium comprising the computer program product according to claim 14.
